# EUROPÄISCHE PATENTANMELDUNG

(11) **EP 4 531 242 A1**
(43) Veröffentlichungstag der Anmeldung: **02.04.2025**
(21) Anmeldenummer: 23200467.1
(22) Anmeldetag: 28.09.2023
(51) Int. Cl.: H02K 1/02, H02K 15/02, H01F 41/02

(54) **VERFAHREN ZUR HERSTELLUNG EINES MATERIALLAGENPAKETS FÜR EINE ELEKTRISCHE MASCHINE**

(71) Anmelder: Siemens Aktiengesellschaft, 80333 München (DE)
(72) Erfinder: Seufert, Reiner, 97616 Salz (DE); Vollmer, Rolf, 36129 Gersfeld (DE)
(74) Vertreter: Siemens Patent Attorneys

(57) **Zusammenfassung**

Die Erfindung betrifft ein Verfahren zur Herstellung eines Materiallagenpakets (2) für eine elektrische Maschine (22). Um das Verfahren zu verbessern werden folgende Schritte vorgeschlagen: Herstellen (A) von Materiallagen (8) aus einem Grünkörper mittels eines, insbesondere drucklosen, Sinterverfahrens, wobei die Materiallagen (8) jeweils eine erste Dicke (d1) im Bereich von 0,5 pm und 500 pm, insbesondere 10 pm bis 300 pm, aufweisen, Aufbringen (B) einer adhäsiven Beschichtung auf die gesinterten Materiallagen (8), Verkleben (C) einer Mehrzahl von Materiallagen (8) zu jeweils einem Materiallagenstapel (12), Stapeln (E) einer Mehrzahl von Materiallagenstapeln (12) und Verbinden (F) der Materiallagenstapel (12) zu einem Materiallagenpaket (2).

## Beschreibung

Die Erfindung betrifft ein Verfahren zum Herstellen eines Materiallagenpakets für eine elektrische Maschine.

Ferner betrifft die Erfindung ein Materiallagenpaket für eine elektrische Maschine.

Darüber hinaus betrifft die Erfindung eine elektrische Maschine mit mindestens einem derartigen Materiallagenpaket.

In elektrischen rotierenden Maschinen, beispielsweise in Motoren und Generatoren, kommen üblicherweise Blechpakete aus gestapelten Elektroblechen zum Einsatz, um eine Ausbreitung von Wirbelströmen zu unterdrücken. Übertrager wie Trafos und Schaltgeräte sind Beispiele für weitere elektrischen Maschinen, die derartige Blechpakete aufweisen können.

Die Elektrobleche der Blechpakete, welche beispielsweise einen weichmagnetischen Werkstoff, insbesondere Eisen, enthalten, werden üblicherweise aus gewalzten Großblechen herausgeschnitten beziehungsweise gestanzt. Anschließend werden die Bleche zu einem Blechpaket paketiert. Durch ein derartiges konventionelles Herstellungsverfahren sind derzeit großtechnisch keine Bleche herstellbar, die eine Lagendicke von kleiner 100 pm aufweisen. Zudem fällt beim Herausschneiden bzw. Stanzen der Bleche aus den Großblechen Abfall an.

Die Patentschrift DE 10 2007 024 822 B3 beschreibt ein Verfahren zum Zusammenbau eines Stators für eine elektrische Maschine.

Die Bleche können auf verschiedene Weise zu einem Blechpaket verbunden werden.

Die Offenlegungsschrift EP 3 353 241 A1 beschreibt eine thermisch aktivierbare Klebstoffzusammensetzung zur Verwendung in einem Verfahren zur Herstellung eines Blechpakets aus miteinander verklebten Blechbauteilen.

Die Offenlegungsschrift EP 0 121 173 A2 beschreibt ein Verfahren zur Herstellung eines Paketes aus geschichteten Blechlamellen für elektrische Maschinen und Geräte, bei dem die Blechlamellen nach dem Ausstanzen, in gegenseitigem Abstand zueinander angeordnet, in einer Glühbehandlung einer reduzierenden Gas-Atmosphäre ausgesetzt und anschließend zu der endgültigen Blechpaket-Form zusammengefügt werden, wobei zur gegenseitigen Verbindung der zu einem Blechpaket zusammenzufügenden Blechlamellen in diese nach Art des Stanz-Paketier-Verfahrens bekannte, einander korrespondierende Erhebungen bzw. Vertiefungen eingestanzt bzw. eingeprägt und die Blechlamellen eines Blechpaketes mittels der ineinandergreifenden Erhebungen bzw. Vertiefungen vor dem Glühen durch axiales Vordrücken zu einem Verband mit gewährleistetem axialen gegenseitigen Mindestabstand und nach der Glühbehandlung durch axiales Enddrücken zu der endgültigen Blechpaket-Form zusammengefügt werden.

Materiallagen mit sehr geringen Lagendicken führen zu einer deutlichen Reduzierung von Wirbelstromverlusten.

Die Offenlegungsschrift EP 3 595 148 A1 beschreibt ein Verfahren zur Herstellung einer Materiallage mit einer Lagendicke zwischen 0,5 und 500 pm mit den Schritten: Aufbringen einer Suspension, aufweisend wenigstens ein Bindemittel und Festteilchen, durch eine Schablone auf eine Grundfläche zum Erhalt eines Grünkörpers, Austreiben des Bindemittels aus dem Grünkörper, insbesondere mittels Entbinderung, Schaffen eines dauerhaften Zusammenhalts der Festteilchen durch Erwärmung und/oder mittels Verdichtung, insbesondere mittels Sinterung.

Derartig dünne Materiallagen neigen zu Beulungen, was insbesondere beim Einschrumpfen oder Einpressen eines Materiallagenpakets in ein Gehäuse zu Problemen führt. Ferner wird zumindest ein Teil der dünnen Materiallagen einzeln nachbearbeitet, was zu hohen Kosten führt.

Der Erfindung liegt daher die Aufgabe zugrunde, die Herstellung von Materiallagenpaketen für elektrische Maschinen zu verbessern.

Diese Aufgabe wird erfindungsgemäß gelöst durch ein Verfahren zur Herstellung eines Materiallagenpakets für eine elektrische Maschine umfassend folgende Schritte: Herstellen von Materiallagen aus einem Grünkörper mittels eines, insbesondere drucklosen, Sinterverfahrens, wobei die Materiallagen jeweils eine erste Dicke im Bereich von 0,5 pm und 500 µm, insbesondere 10 pm bis 300 pm, aufweisen, Aufbringen einer adhäsiven Beschichtung auf die gesinterten Materiallagen, Verkleben einer Mehrzahl von Materiallagen zu jeweils einem Materiallagenstapel, Stapeln einer Mehrzahl von Materiallagenstapeln, Verbinden der Materiallagenstapel zu einem Materiallagenpaket.

Ferner wird die Aufgabe erfindungsgemäß gelöst durch ein Materiallagenpaket für eine elektrische Maschine, welches eine Mehrzahl von Materiallagenstapeln miteinander verbundenen umfasst, wobei die Materiallagenstapel jeweils eine Mehrzahl von Materiallagen aufweisen, welche mittels einer adhäsiven Beschichtung miteinander verklebt sind, wobei die Materiallagen aus einem Grünkörper mittels eines, insbesondere drucklosen, Sinterverfahrens, hergestellt sind und jeweils eine erste Dicke im Bereich von 0,5 pm und 500 pm, insbesondere 10 pm bis 300 pm, aufweisen.

Darüber hinaus wird die Aufgabe erfindungsgemäß gelöst durch eine elektrische Maschine mit mindestens einem derartigen Materiallagenpaket.

Die in Bezug auf das Verfahren nachstehend angeführten Vorteile und bevorzugten Ausgestaltungen lassen sich sinngemäß auf das Materiallagenpaket und die elektrische Maschine übertragen.

Der Erfindung liegt die Überlegung zugrunde, ein Verfahren zur Herstellung von Materiallagenpaketen für elektrische Maschinen, welches aus dünnen aus einem Grünkörper, insbesondere drucklos, gesinterten Materiallagen aufgebaut ist, zu verbessern, indem die Steifigkeit der zu paketierenden Materiallagen bei gleichbleibender Wirbelstromunterdrückung verbessert wird. Dies wird erreicht, indem eine Mehrzahl von Materiallagen, welche jeweils eine erste Dicke im Bereich von 0,5 pm und 500 pm, insbesondere 10 pm bis 300 pm, aufweisen, zu einem Materiallagenstapel zusammengefasst werden. Die einzelnen Materiallagen des Materiallagenstapels werden über eine adhäsive Beschichtung miteinander verbunden. Beispielsweise kann die adhäsive Beschichtung elektrisch isolierend ausgeführt sein, wobei durch eine derartige adhäsive Beschichtung neben einem Korrosionsschutz eine elektrische Isolation zwischen den Materiallagen bereitgestellt wird. Insbesondere kann der Materiallagenstapel eine Dicke im Bereich von 200 pm bis 1 mm aufweisen, welche im Bereich eines Elektroblechs, das durch Walzen hergestellt ist, liegt. Durch die Erhöhung der Steifigkeit wird das Handling für das Verbinden der Materiallagenstapel zu einem Materiallagenpaket erheblich vereinfacht. Dies hat neben einer Erhöhung des Durchsatzes eine deutliche Kostensenkung zur Folge, was unter anderem auf die reduzierte Stückzahl von Einzelteilen im Prozessdurchlauf zurückzuführen ist.

Eine weitere Ausführungsform sieht vor, dass vor dem Verbinden ein Angleichen einer Kontur der Materiallagenstapel an eine Sollkontur erfolgt. Die Kontur umfasst beispielsweise eine, insbesondere äußere, Mantelfläche des Materiallagenstapels. Das Angleichen der Kontur des Materiallagenstapels an eine Sollkontur wird auch Kalibrierprozess genannt. Durch die Erhöhung der Steifigkeit durch Verkleben der Materiallagen zu einem Materiallagenstapel wird der Kalibrierprozess vereinfacht und es sind bekannte Fertigungsverfahren für durch Walzen hergestellte Elektrobleche anwendbar.

Eine weitere Ausführungsform sieht vor, dass das Angleichen mittels Stanzen, Erodieren und/oder Schneiden, insbesondere Laserschneiden, erfolgt. Derartige Verfahren sind kostengünstig und einfach anwendbar.

Eine weitere Ausführungsform sieht vor, dass der Grünkörper zum Herstellen der Materiallagen aus einer Suspension, welche zumindest Legierungsfestteilchen und zumindest einen Binder umfasst, hergestellt wird. Die Legierungsfestteilchen können Eisen, insbesondere Reineisen, und/oder Kobalt enthalten. Der Binder, welcher als flüssiger Klebstoff fungiert, kann beispielsweise ein organischer Binder sein, welcher vor dem Sintern oder während des Sintervorgangs entfernt wird. Insbesondere liegt die Suspension als Paste vor. Der Grünkörper zum Erhalt der dünnen Materiallagen kann unter anderem mittels eines additiven Verfahrens hergestellt werden. Additive Verfahren zur Herstellung des Grünkörpers können unter anderem Siebdruck, Schablonendruck und Rollendruck sein. Mittels derartiger Suspensionen sind dünne Materiallagen einfach und kostengünstig herstellbar.

Eine weitere Ausführungsform sieht vor, dass das Verbinden der Materiallagenstapel kraftschlüssig erfolgt. Die erhöhte Steifigkeit der Laminate gegenüber dünner Einzelbleche ermöglicht den Verzicht auf eine vollständige Verklebung aller Einzelbleche, was Kosten sowie Zeit einspart und Folgeprozesse vereinfacht.

Eine weitere Ausführungsform sieht vor, dass das kraftschlüssige Verbinden mittels Stanzpaketieren erfolgt. Dabei wird beispielsweise ein Materiallagenstapel mit einem Werkzeug an einer oder mehreren Stellen plastisch in eine Öffnung eines sich darunter befindlichen Materiallagenstapels gedrückt, wodurch eine kraftschlüssige Verbindung zwischen den einzelnen Materiallagenstapeln entsteht. Insbesondere der Fügeprozess von Stern- und Jochpaketen wird vereinfacht, da bekannte Fertigungsverfahren, wie beispielsweise die Stern-Joch-Paket-Technik, genutzt werden können.

Eine weitere Ausführungsform sieht vor, dass beim Aufbringen der adhäsiven Beschichtung ein Klebelack, insbesondere ein Backlack, aufgebracht wird. Beispielsweise werden Materiallagen durch Verpressen unter Druck und Hitze miteinander zu Materiallagenstapeln verklebt. Insbesondere durch die Verwendung von Backlack wird eine hohe elektrische Isolation zwischen den Materiallagen erreicht. Ferner wird Korrosion durch das Verbacken der Materiallagen verhindert und eine verbesserte mechanische Festigkeit bzw. Steifigkeit erzielt.

Eine weitere Ausführungsform sieht vor, dass die Materiallagenstapel, insbesondere zusätzlich, adhäsiv miteinander verbunden werden. Dies ist vorteilhaft, da so eine verbesserte mechanische Festigkeit bzw. Steifigkeit erzielt wird.

Es zeigen:
- FIG 1: eine schematische Darstellung eines Verfahrens zum Herstellen eines Materiallagenpakets,
- FIG 2: eine schematische Darstellung eines Materiallagenpakets,
- FIG 3: eine dreidimensionale Darstellung eines Materiallagenpakets für eine elektrische Maschine und
- FIG 4: eine schematische Längsschnittdarstellung einer elektrischen rotierenden Maschine.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

Gleiche Bezugszeichen haben in den verschiedenen Figuren die gleiche Bedeutung.

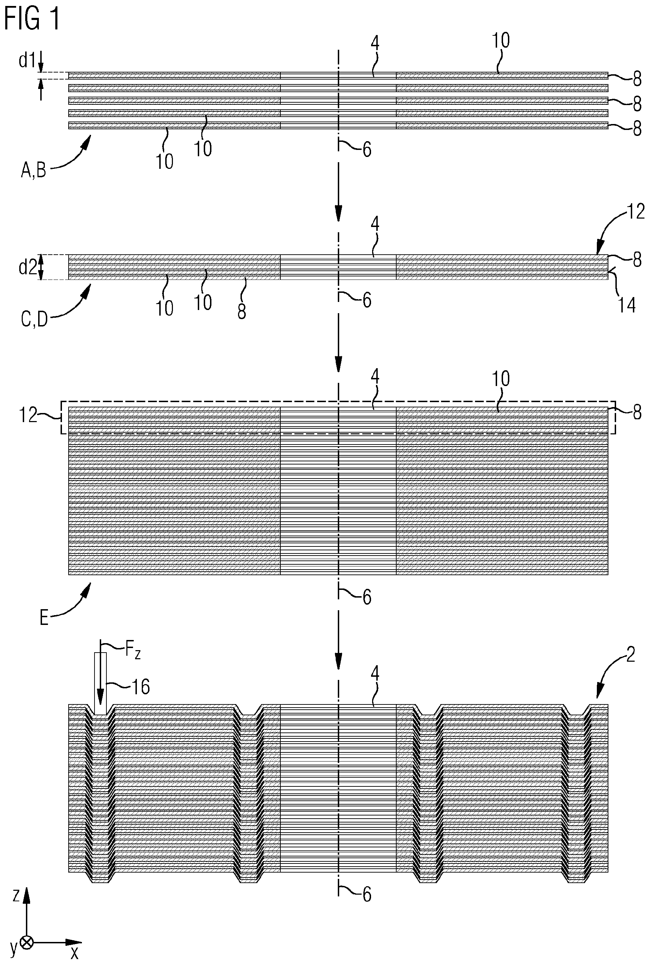

FIG 1 eine schematische Darstellung eines Verfahrens zum Herstellen eines Materiallagenpakets 2, welches eine mittig angeordnete Aussparung 4 umfasst, durch welche eine Achse 6 verlaufend angeordnet ist. Insbesondere ist das Materiallagenpaket 2 im Wesentlichen rotationssymmetrisch zur Achse 6 ausgeführt. Das Materiallagenpaket 2 kann für einen Stator oder einen Rotor einer elektrischen rotierenden Maschine konfiguriert sein.

Das Herstellungsverfahren umfasst ein Herstellen A von Materiallagen 8 aus einem Grünkörper mittels eines, insbesondere drucklosen, Sinterverfahrens, wobei die Materiallagen 8 im Wesentlichen eben ausgeführt und in einer xy-Ebene angeordnet sind. Die Materiallagen 8 weisen jeweils eine erste Dicke d1 im Bereich von 0,5 pm und 500 pm, insbesondere 10 pm bis 300 pm, aufweisen. Insbesondere weisen die Materiallagen 8 eine im Wesentlichen identische erste Dicke d1 auf. Ein derartiger Grünkörper zum Erhalt der Materiallagen 8 wird aus einer Suspension, welche Legierungsfestteilchen und zumindest einen Binder umfasst, mittels eines additiven Verfahrens hergestellt. Additive Verfahren zur Herstellung des Grünkörpers können unter anderem Siebdruck, Schablonendruck und Rollendruck sein. Der Binder, welcher als flüssiger Klebstoff fungiert, kann beispielsweise ein organischer Binder sein, der vor dem Sintern oder während des Sintervorgangs entfernt wird. Insbesondere liegt die Suspension als Paste vor.

Für den Grünkörper der ersten Materiallagen 8 werden Legierungsfestteilchen, die Eisen, insbesondere Reineisen, und/oder Kobalt enthalten, verwendet. Zusätzlich kann die Suspension unter anderem, insbesondere pulverförmige, Sinterhilfsmittel enthalten. Beispielsweise weisen die Sinterhilfsmittel in den gesinterten ersten Materiallagen 8 einen Gewichtsanteil im Bereich von 0,4 % bis 1 % auf. Beispielsweise enthalten die Sinterhilfsmittel bei Herstellung einer Eisen-Kobalt-Legierung Phosphorverbindungen, z.B. Eisenphosphide, und/oder Borverbindungen, z.B. Eisenboride. Die Sinterhilfsmittel bilden mit den zu sinternden Legierungen Eutektika aus, wodurch Lunker und Poren weitgehend vermieden werden, sodass beim drucklosen Sinterprozess eine hohe Dichte erreicht wird.

Ferner umfasst das Verfahren ein Aufbringen B einer adhäsiven Beschichtung 10 auf die gesinterten Materiallagen 8. Die adhäsive Beschichtung 10 kann unter anderem einen Klebelack, insbesondere einen Backlack, enthalten, der ein- oder beidseitig auf die gesinterten Materiallagen 8 aufgetragen wird. Der Klebelack wird getrocknet und in einem Folgeprozess zum Verkleben von mehreren Materiallagen 8, insbesondere thermisch, aktiviert.

Das Verfahren umfasst überdies ein Verkleben C von beispielhaft fünf beschichteten Materiallagen 8 zu jeweils einem Materiallagenstapel 12. Durch die adhäsive Beschichtung 10 wird ein Korrosionsschutz und eine elektrische Isolation zwischen den Materiallagen 8 hergestellt. Ein Materiallagenstapel 12 weist beispielsweise eine zweite Dicke d2 im Bereich von 200 pm bis 1 mm auf. Ferner erfolgt ein Angleichen D einer Kontur 14 der Materiallagenstapel 12 an eine Sollkontur, was auch Kalibrierprozess genannt wird. Der Kalibrierprozess zur Herstellung der Sollkontur erfolgt beispielsweise mittels Stanzen. Zusätzlich oder alternativ beinhaltet der Kalibrierprozess ein Erodieren und/oder Schneiden, insbesondere Laserschneiden.

In einem weiteren Schritt erfolgt ein Stapeln E einer Mehrzahl von verklebten und kalibrierten Materiallagenstapeln 12. Insbesondere weisen die Materiallagenstapel 12 des Materiallagenpakets 2 eine im Wesentlichen identische erste Dicke d2 auf. Darüber hinaus erfolgt ein Verbinden F der Materiallagenstapel 12 zu einem Materiallagenpaket 2, wobei das Verbinden F der Materiallagenstapel 12 kraftschlüssig erfolgt. Das kraftschlüssige Verbinden erfolgt mittels Stanzpaketieren. Dabei wird beispielsweise ein Materiallagenstapel 12 mit einem Werkzeug 16 mittels einer Kraft Fz in z-Richtung an einer oder mehreren Stellen plastisch in eine Öffnung eines darunter liegenden Materiallagenstapels 12 gedrückt, wodurch eine kraftschlüssige Verbindung zwischen den einzelnen Materiallagenstapeln 12 entsteht. Die Öffnungen sind aus Gründen der Übersichtlichkeit in FIG 1 nicht dargestellt. Das Verbinden F kann zusätzlich oder alternativ Nieten, Schweißen, insbesondere Widerstands- bzw. Laserschweißen, Gewindedrücken bzw. - schneiden und/oder adhäsives Verbinden der Materiallagenstapel 12 beinhalten.

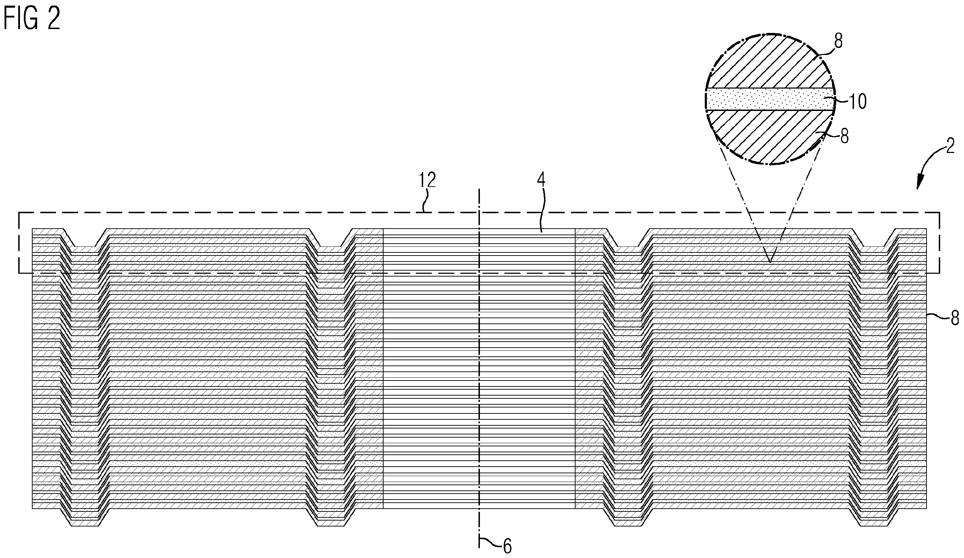

FIG 2 zeigt eine schematische Darstellung eines Materiallagenpakets 2, welches nach dem in FIG 1 beschriebenen Verfahren hergestellt ist. Das Materiallagenpaket 2 umfasst eine Mehrzahl von Materiallagenstapeln 12, wobei die Materiallagenstapel 12 jeweils eine Mehrzahl von Materiallagen 8 aufweisen, welche mittels einer adhäsiven Beschichtung 10 miteinander verklebt sind, wobei die adhäsive Beschichtung 10 einen Klebelack, insbesondere einen Backlack, umfasst. Die Materiallagenstapel 12 sind mittels Stanzpaketieren kraftschlüssig miteinander verbunden. Die weitere Ausführung des Materiallagenpakets 2 in FIG 2 entspricht dem in FIG 1.

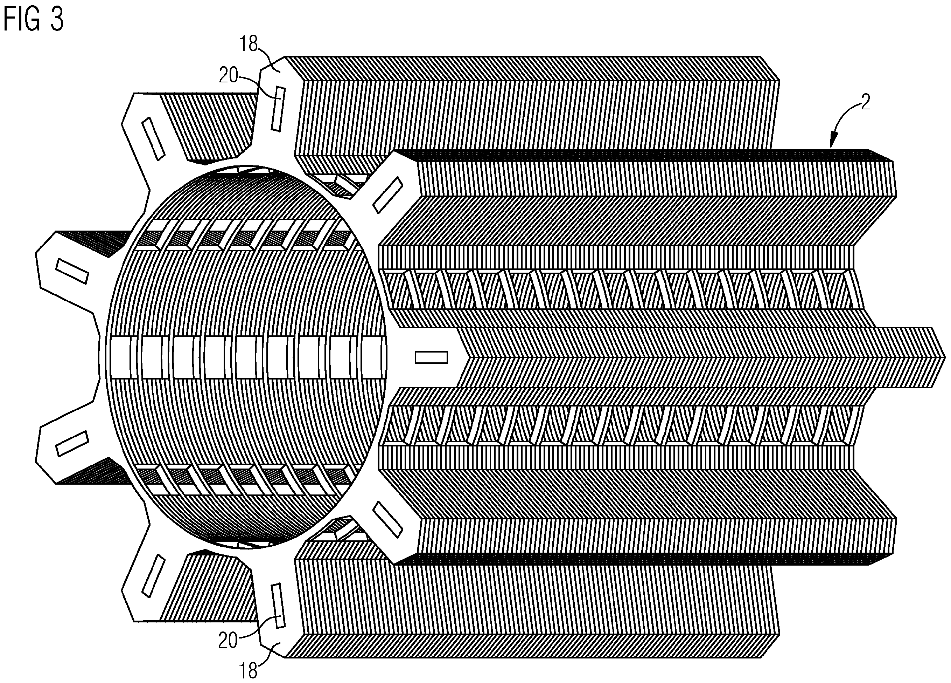

FIG 3 zeigt eine dreidimensionale Darstellung eines Materiallagenpakets 2 für eine elektrische rotierende Maschine, welches als Sternpaket ausgeführt und nach dem in FIG 1 beschriebenen Verfahren hergestellt ist. Das Sternpaket weist eine Mehrzahl von Zähnen 18 auf in welchen beispielhaft jeweils eine Stanzpaketierverbindung 20 zur kraftschlüssigen Verbindung der Materiallagenstapeln 12 angeordnet ist. Das Sternpaket kann zusammen mit einem Jochpaket, welches aus Gründen der Übersichtlichkeit in FIG 3 nicht dargestellt ist, ein Statorpaket für eine elektrische rotierende Maschine ausbilden. Das Jochpaket kann ebenfalls nach dem in FIG 1 beschriebenen Verfahren hergestellt sein. Die weitere Ausführung des Materiallagenpakets 2 in FIG 2 entspricht dem in FIG 1.

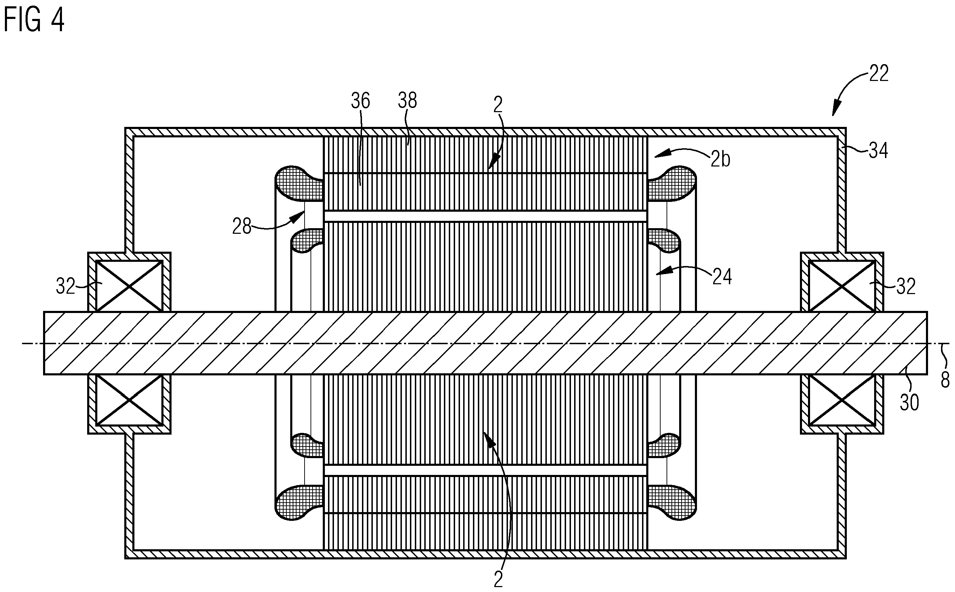

FIG 4 zeigt eine schematische Längsschnittdarstellung einer elektrischen rotierenden Maschine 22, welche beispielhaft als Synchronmaschine ausgeführt ist. Die Synchronmaschine weist einen um eine Achse 8 rotierbaren Rotor 24 und einen den Rotor 24 umgebenden Stator 26 auf. Zwischen dem Rotor 24 und dem Stator 26 befindet sich ein Spalt 28, der insbesondere als Luftspalt ausgeführt ist. Der Rotor 24 umfasst eine Welle 30, die über Lager 32 gelagert ist. Der Rotor 24 und der Stator 26 sind beispielhaft in einem Gehäuse 34 untergebracht.

Der Rotor 24 und der Stator 26 weisen jeweils mindestens ein Materiallagenpaket 2 auf, welches nach dem in FIG 1 beschriebenen Verfahren hergestellt ist. Insbesondere weist der Stator 26, wie in FIG 4 beschrieben, ein Sternpaket 36 und ein Jochpaket 38 auf.

Zusammenfassend betrifft die Erfindung ein Verfahren zur Herstellung eines Materiallagenpakets 2 für eine elektrische Maschine 22. Um das Verfahren zu verbessern werden folgende Schritte vorgeschlagen: Herstellen A von Materiallagen 8 aus einem Grünkörper mittels eines, insbesondere drucklosen, Sinterverfahrens, wobei die Materiallagen 8 jeweils eine erste Dicke d1 im Bereich von 0,5 pm und 500 pm, insbesondere 10 pm bis 300 pm, aufweisen, Aufbringen B einer adhäsiven Beschichtung auf die gesinterten Materiallagen 8, Verkleben C einer Mehrzahl von Materiallagen 8 zu jeweils einem Materiallagenstapel 12, Stapeln E einer Mehrzahl von Materiallagenstapeln 12 und Verbinden F der Materiallagenstapel 12 zu einem Materiallagenpaket 2.

## Patentansprüche

1. Verfahren zur Herstellung eines Materiallagenpakets (2) für eine elektrische Maschine (22) umfassend folgende Schritte:
- Herstellen (A) von Materiallagen (8) aus einem Grünkörper mittels eines, insbesondere drucklosen, Sinterverfahrens, wobei die Materiallagen (8) jeweils eine erste Dicke (d1) im Bereich von 0,5 pm und 500 pm, insbesondere 10 pm bis 300 pm, aufweisen,
- Aufbringen (B) einer adhäsiven Beschichtung auf die gesinterten Materiallagen (8),
- Verkleben (C) einer Mehrzahl von Materiallagen (8) zu jeweils einem Materiallagenstapel (12),
- Stapeln (E) einer Mehrzahl von Materiallagenstapeln (12),
- Verbinden (F) der Materiallagenstapel (12) zu einem Materiallagenpaket (2).

2. Verfahren nach Anspruch 1,
wobei vor dem Verbinden (F) ein Angleichen (D) einer Kontur (14) der Materiallagenstapel (12) an eine Sollkontur erfolgt.

3. Verfahren nach Anspruch 2,
wobei das Angleichen (D) mittels Stanzen, Erodieren und/oder Schneiden, insbesondere Laserschneiden, erfolgt.

4. Verfahren nach einem der vorherigen Ansprüche,
wobei der Grünkörper zum Herstellen der Materiallagen (8) aus einer Suspension, welche zumindest Legierungsfestteilchen und zumindest einen Binder umfasst, hergestellt wird.

5. Verfahren nach einem der vorherigen Ansprüche,
wobei das Verbinden (F) der Materiallagenstapel (12) kraftschlüssig erfolgt.

6. Verfahren nach Anspruch 5,
wobei das kraftschlüssige Verbinden (F) mittels Stanzpaketieren erfolgt.

7. Verfahren nach einem der vorherigen Ansprüche,
wobei beim Aufbringen (B) der adhäsiven Beschichtung (10) ein Klebelack, insbesondere ein Backlack, aufgebracht wird.

8. Verfahren nach einem der vorherigen Ansprüche,
wobei das Aufbringen (B) einseitig oder zweiseitig erfolgt.

9. Verfahren nach einem der vorherigen Ansprüche,
wobei die Materiallagenstapel (12), insbesondere zusätzlich, adhäsiv miteinander verbunden werden.

10. Materiallagenpaket (2) für eine elektrische Maschine (22), welches eine Mehrzahl von miteinander verbundenen Materiallagenstapeln (12) umfasst,
wobei die Materiallagenstapel (12) jeweils eine Mehrzahl von Materiallagen (8) aufweisen, welche mittels einer adhäsiven Beschichtung (10) miteinander verklebt sind,
wobei die Materiallagen (8) aus einem Grünkörper mittels eines, insbesondere drucklosen, Sinterverfahrens, hergestellt sind und jeweils eine erste Dicke (d1) im Bereich von 0,5 pm und 500 pm, insbesondere 10 pm bis 300 pm, aufweisen.

11. Materiallagenpaket (2) nach Anspruch 10,
wobei die Materiallagenstapel (12) kraftschlüssig miteinander verbunden sind.

12. Materiallagenpaket (2) nach Anspruch 11,
wobei die kraftschlüssige Verbindung mittels Stanzpaketieren hergestellt ist.

13. Materiallagenpaket (2) nach einem der Ansprüche 10 bis 12,
wobei die adhäsive Beschichtung einen Klebelack, insbesondere einen Backlack, umfasst.

14. Materiallagenpaket (2) nach einem der Ansprüche 10 bis 13,
wobei ein Materiallagenstapel 12 eine zweite Dicke d2 im Bereich von 200 pm bis 1 mm aufweist.

15. Elektrische Maschine (22) umfassend mindestens ein Materiallagenpaket (2) nach einem der Ansprüche 10 bis 14.
